# EUROPÄISCHE PATENTSCHRIFT

(11) **EP 1 252 776 B1**
(45) Veröffentlichungstag und Bekanntmachung des Hinweises auf die Patenterteilung: **04.01.2006**
(21) Anmeldenummer: 01902331.6
(22) Anmeldetag: 17.01.2001
(51) Int. Cl.: H04Q 7/22, H04M 3/533

(54) **VERFAHREN ZUR ÜBERMITTLUNG EINER NACHRICHT SOWIE TELEKOMMUNIKATIONSSYSTEM**
MESSAGE FOR TRANSMISSION OF A MESSAGE AND TELECOMMUNICATION SYSTEM
PROCEDE DE TRANSMISSION D'UN MESSAGE, ET SYSTEME DE TELECOMMUNICATION

(30) Priorität: 02.02.2000 EP 00102074
(43) Veröffentlichungstag der Anmeldung: 30.10.2002
(60) Teilanmeldung: 05010363.9
(73) Patentinhaber: SIEMENS AKTIENGESELLSCHAFT, 80333 München (DE); Materna GmbH Information & Communications, 44141 Dortmund (DE)
(72) Erfinder: BECKER, Thomas, 59755 Arnsberg (DE); BRUCHERTSEIFER, Jörg, 86156 Augsburg (DE); HELING, Guido, 44263 Dortmund (DE); LUCASSEN, Helmut, 48703 Stadtlohn (DE); VAN DE LOGT, Marco, 47574 Goch (DE); WATZKE, Jörn, 85368 Moosburg (DE)
(74) Vertreter: Berg, Peter
(86) Internationale Anmeldenummer: PCT/EP2001/000502
(87) Internationale Veröffentlichungsnummer: WO 2001/058185

(56) Entgegenhaltungen:
- WO-A1-99/49644
- GB-A- 2 298 339
- US-A- 5 815 506

## Beschreibung

Die Erfindung betrifft ein Verfahren zur Übermittlung einer Nachricht von einem ersten zu einem zweiten Telekommunikations-Endgerät, von denen mindestens eines an ein leitungsgebundenes Telefonnetz angeschlossen ist, sowie ein Telekommunikationssystem zur Durchführung dieses Verfahrens.

In nach dem GSM-Standard arbeitenden Mobilfunknetzen hat sich neben der - natürlich bei weitem dominierenden - Sprachkommunikation, insbesondere mit Blick auf erhebliche Kostenvorteile, die Kommunikation mittels kurzer Kurznachrichten (Short Messages) auf der Grundlage des hierfür geschaffenen Standards erfolgreich etabliert. Neben den Kostenvorteilen hat die Nachrichtenübertragung per SMS (Short Message Service) in bestimmten Anwendungsfällen auch Gebrauchswertvorteile. So sind Empfang und Absendung einer SMS ohne akustische Belästigung für die Umgebung realisierbar, und die übermittlung von Kurznachrichten bietet gegenüber der Sprachkommunikation auch zusätzliche Ausdrucks- und psychologische Akzentuierungsmöglichkeiten.

Bei SMS handelt es sich um einen Punkt-Zu-Punkt-Kurznachrichtendienst, der im Rahmen der GSM-Protokollarchitektur auf der Signalisierungsebene realisiert wird. Er umfaßt den Transport paketorientierter Nutzdaten von und zu Mobilstationen. Die Kurznachrichten werden stets über ein Short-Message-Dienstzentrum (SM SC = Short Message Service Center) im Store-and-Forward-Betrieb transportiert. Das Dienstzentrum nimmt die maximal 160 Zeichen langen Kurznachrichten von einer Mobilstation als Telekommunikations-Endgerät entgegen und leitet sie an ein zweites Telekommunikations-Endgerät --eine weitere Mobilstation oder auch ein Faxgerät o. ä. - weiter.

Zur Realisierung dieses Dienstes definiert der GSM-Standard eine spezielle Protokollarchitektur. Diese ist in den ETSI-Spezifikationen festgelegt und wird in der Literatur hinreichend beschrieben (vgl. etwa J. Eberspächer, H. J. Vögel: "GSM Global System for mobile communication", Stuttgart, 1997), so daß eine genauere Beschreibung hier entbehrlich ist und auf das anhängende Normen-/Dokumentenverzeichnis verwiesen werden kann.

In den bestehenden öffentlichen leitungsgebundenen Telefonnetzen ist eine derartige Übertragung von Kurznachrichten zwischen normalen Telekommunikations-Endgeräten (z. B. Telefonen) derzeit nicht möglich.

Aus der GB 2 298 339 A ist ein Verfahren zum Übertragen von Kurznachrichten zwischen einem Kurznachrichten-Dienstzentrum und einem DECT-Schnurlostelefon, bestehend aus einer Feststation und einem Mobilteil, bekannt, bei dem die Kurznachricht von dem Dienstzentrum zu der Feststation über eine separate, Dienstzentrumsbetreiber-spezifische Verbindung, die z.B. als ein X.25-Netzwerk realisiert ist, gemäß einem SMS-spezifischen Protokoll übertragen wird.

Aus der US 5,815,506 ist ein Satellitenkommunikationssystem bekannt, über das eine Kurznachricht, die von einem Festnetzteilnehmer generiert worden sind, gemäß einem SMS-spezifischen Protokoll an einen Mobilfunkteilnehmer übertragen werden. Die Kurznachricht wird dazu zunächst von dem Festnetzteilnehmer über ein PSTN-Netz an einen Kurznachrichtenserver übertragen. Von dort gelangt die Kurznachricht über eine lokale Satellitenbodenstation, einen Satelliten und einer Mobilfunkstation zum Mobilfunkteilnehmer. Für die Kurznachrichtenübertragung zwischen dem Festnetzteilnehmer und dem Mobilfunkteilnehmer wird eine Signalisierung außerhalb des Sprach- bzw. Nutzdatenbandes, die sogenannte Außenbandsignalisierung, benutzt. Bei dieser Art der Kurznachrichtenübertragung lassen sich Nachrichtenmengen bis zu maximal 16 Kbyte übertragen. In dem PSTN-Netz stehen für diese Art der Übertragung ein "DIAL UP"-Modem sowie eine DTMF-Tonerkennung zur Verfügung.

Der Erfindung liegt daher die Aufgabe zugrunde, ein Verfahren sowie ein Telekommunikationssystem anzugeben, die die Übermittlung von Kurznachrichten nach dem Vorbild des SMS in einem leitungsgebundenen Telefonnetz (Festnetz) ermöglichen.

Diese Aufgabe wird hinsichtlich ihres Verfahrensaspektes durch ein Verfahren mit den Merkmalen des Anspruchs 1 und hinsichtlich ihres Anordnungsaspektes durch ein Telekommunikationssystem mit den Merkmalen des Anspruchs 2 gelöst.

Die Erfindung schließt den grundlegenden Gedanken ein, ohne Rücksicht auf die tiefgreifenden Systemunterschiede zwischen Mobilfunknetzen einerseits und den bekannten leitungsgebundenen Netzen (Festnetzen) andererseits die bewährte SMS-Protokollarchitektur des GSM-Standards (bzw. auch eine vergleichbare Architektur des UMTS-Standards) auf das Festnetz gewissermaßen abzubilden und auszuweiten.

Mit den nachfolgend beschriebenen Spezifikationen definiert die Erfindung das Übertragungsprotokoll und die physikalischen und administrativen Voraussetzungen zur Übertragung von Kurznachrichten im Short-Message(SMS)-Format zwischen dem Endgerät und dem Short-Message-Dienstzentrum. Das Übertragungsprotokoll wird hierbei bevorzugt in enger Anlehnung an das beim GSM-Standard definierte Protokoll festgelegt. Hiermit wird das Ziel verfolgt, die Übermittlung von Kurznachrichten als für das Festnetz neuen Dienst mit geringem Aufwand und hoher Kompatibilität mit bestehenden Systemen anzubieten. Es wird ein einheitliches SMS-Format im GSM-Netz und im Festnetz verwendet, wodurch die reibungslose Übermittlung von Short Messages zwischen einem nach dem GSM-Standard aufgebauten und betriebenen Mobilfunknetz und dem erfindungsgemäß ausgerüsteten Festnetz gewährleistet wird. Zudem bietet der mit dieser Ausführung der Erfindung eingeschlagene Weg den erheblichen praktischen Vorteil, daß in der Spezifikation des SMS-Dienstes weitestgehend auf die anerkannten und mittlerweile erprobten und bewährten GSM-Spezifikationen zurückgegriffen werden kann.

In der physikalischen Schicht erfolgt die Datenübertragung zwischen Endgerät und Dienstzentrum mittels DTMF-Signalisierung und/oder über eine nach ETS 300 659-1 und ETS 300 659-2 spezifizierte FSK(Frequency Shift Keying - Frequenzumtastkodierung) Off-Hook-Signalisierung im Sprachband (Innenbandsignalisierung). Diese genannten Übertragungsverfahren können in beliebigen Kombinationen eingesetzt werden. Insbesondere kann das Endgerät eine Signalisierung mittels DTMF vornehmen und das Dienstzentrum kann die FSK-Modulation nutzen, wobei natürlich die jeweils empfangende Einheit für das angewandte Verfahren angepaßt sein muß.

Oberhalb der physikalischen Schicht ist eine Datenverbindungs-Schicht (Data-Link-Layer) spezifiziert, die den logischen Verbindungsaufbau und das Aufsetzen auf den Standard GSM-SMS gewährleistet. Der letztere Standard ist insbesondere in den ETSI-Dokumenten GSM04.07 (ETS 300 556), GSM04.11 und GSM03.40 definiert. In Kompatibilität hierzu kann der Data-Link-Layer in Anpassung an die konkreten Anforderungen frei definiert werden.

Gemäß einer vorteilhaften Ausprägung der Erfindung sind die neu definierte physikalische Schicht und Datenverbindungs-Schicht mit den bestehenden Schichten (Layern) des GSM-SMS-Protokollsatzes kombiniert. Hierbei handelt es sich um die Short-Message-Transferschicht (Short Message Transfer Layer = SM-TL) gemäß ETSI-Dokument GSM03.40, die Short-Message-Relayschicht (Short Message Relay Layer = SM-RL) nach GSM03.40 und 04.11 sowie die Verbindungsmanagement-Schicht (Connection Management Layer = CM) nach GSM04.11.

In der zuletzt genannten Schicht CM ist speziell eine zusätzliche Nachricht zur Signalisierung des Verbindungszustandes (CP-Connect) definiert, deren Format nach GSM04.07/Kapitel 11 bestimmt ist. Eine spezielle Festlegung gibt es auch hinsichtlich des Formates einer Nachricht in der Data Link Layer DL. Hierauf wird weiter unten genauer eingegangen.

In einer bevorzugten Anwendung der Erfindung ist, wie weiter oben bereits angedeutet, eines der Telekommunikations-Endgeräte an ein nach dem GSM- oder auch dem künftigen UMTS-Standard betriebenes Mobilfunknetz angeschlossen, wobei die Verbindung zwischen beiden Netzen in üblicher Weise durch eine Gateway-Mobilvermittlungsstelle hergestellt wird.

Eine weitere vorteilhafte Anwendung der Erfindung ergibt sich, wenn mindestens eines der Telekommunikations-Endgeräte ein Schnurlostelefon ist, von dem bzw. zu dem die Kurznachricht über eine nach dem DECT-Standard betriebene Feststation oder Nebenstellenanlage in das bzw. aus dem Festnetz übertragen wird. Moderne Schnurlostelefone verfügen über die wichtigsten hardwaremäßigen Voraussetzungen zur Implementierung des vorgeschlagenen Dienstes; insbesondere sind sie in der Regel mit einer geeigneten Anzeigeeinheit und Mitteln zur DTMF-Signalisierung ausgerüstet und zur Erkennung der oben erwähnten FSK-Off-Hook-Signalisierung im Sprachband ausgebildet.

Vorteile und Zweckmäßigkeiten der Erfindung ergeben sich im übrigen aus der nachfolgenden genaueren Beschreibung anhand der Figuren. Von diesen zeigen:
Fig. 1 eine Prinzipskizze eines Telekommunikationssystems gemäß der Erfindung,
Fig. 2 eine Darstellung des Schichtenmodells (SI-Modells) der Konfiguration nach Fig. 1,
Fig. 3 ein Flußdiagramm für einen vom Telekommunikations-Endgerät initiierten Verbindungsaufbau gemäß einer Ausführung der Erfindung,
Fig. 4 ein Flußdiagramm für einen vom Short-Message-Dienstzentrum initiierten Verbindungsaufbau gemäß einer Ausführung der Erfindung,
Fig. 5 eine Darstellung des Aufbaus einer Nachricht zum Start der Prozedur auf der Verbindungsmanagement-Schicht und
Fig. 6 eine Darstellung des Nachrichtenformates auf der Datenverbindungs-Schicht.

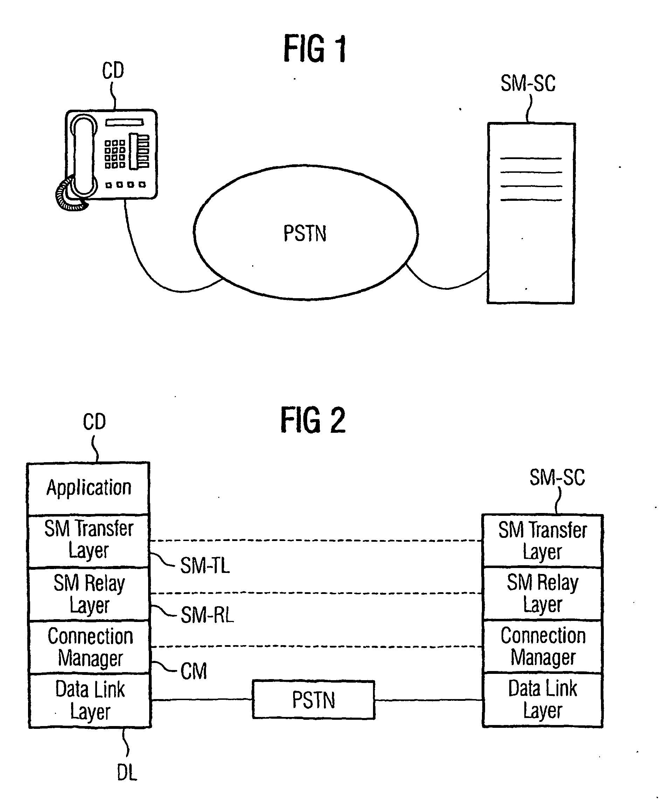

Fig. 1 zeigt schematisch die grundlegenden Komponenten eines erfindungsgemäßen Telekommunikationssystems, nämlich ein öffentliches leitungsgebundenes Fernsprechnetz (Festnetz) PSTN, ein an dieses angeschlossenes Telekommunikations-Endgerät CD und ein ebenfalls an das Festnetz angeschlossenes Short-Message-Dienstzentrum SM SC. Auf das Zusammenspiel dieser Komponenten beziehen sich die nachfolgenden Ausführungen zur Erläuterung der Erfindung.

Fig. 2 zeigt das zugehörige SI-Schichtenmodell, oberhalb der (hier nicht dargestellten) physikalischen Schicht. Die Schichtstruktur umfaßt zunächst eine - weiter unten genauer spezifizierte - Datenverbindungs-Schicht DL (Data Link Layer) und weiterhin die an sich aus dem GSM-SMS-Standard bekannten Schichten Verbindungsmanager CM (Connection Manager), Short-Message-Relaisschicht SM-RL (SM Relay Layer) und Short-Message-Transferschicht SM-TL (SM Transfer Layer) sowie - auf Seiten des Endgerätes - Applikation (Application).

Die Protokollbeschreibungen der Schichten SM-TL, SM-RL und CM sind den ETSI-Dokumenten GSM03.40 [1] und GSM04.11 [3] zu entnehmen; siehe dazu das anliegende Normen-/Dokumentenverzeichnis.

Die Grundvoraussetzung zur Übertragung von Kurznachrichten (Short Messages) über das Festnetz PSTN ist eine Durchschaltvermittlung zwischen den beteiligten Einheiten (Telekommunikations-Endgeräte und Short-Message-Dienstzentrum). Es ist dann unerheblich, ob die Einheiten über ISDN oder eine analoge Schnittstelle angeschlossen sind.

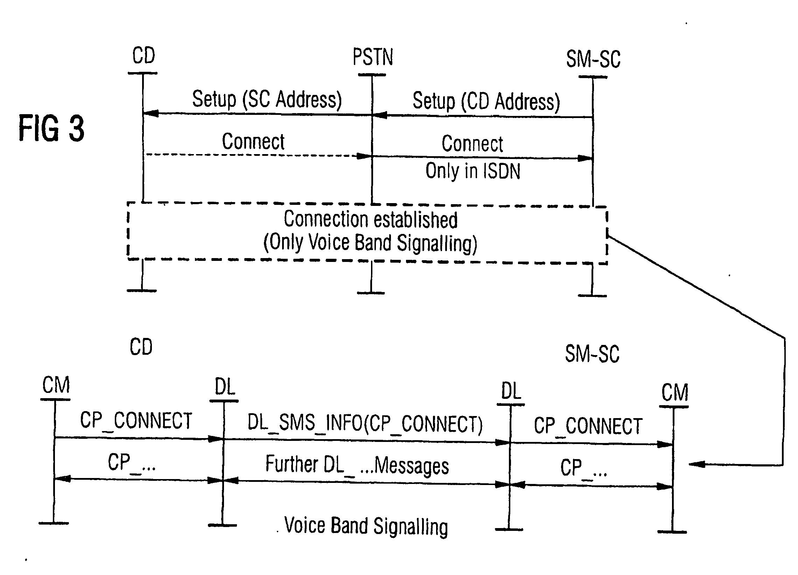

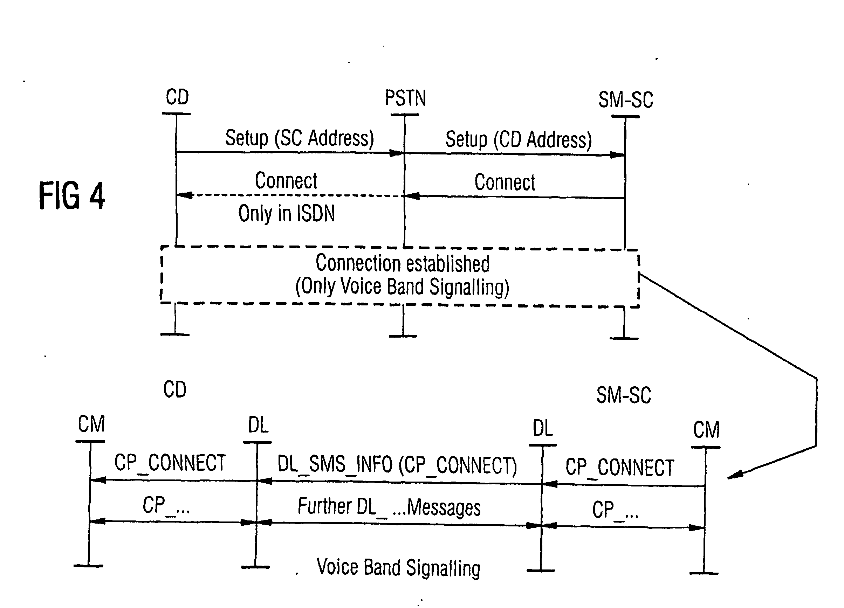

In den Figuren 3 und 4 ist schematisch der Aufbau einer Verbindung ausgehend von einem Telekommunikations-Endgerät (Fig. 3) bzw. ausgehend von dem Short-Message-Dienstzentrum (Fig. 4) dargestellt. Diese Diagramme sind für den Fachmann selbst erklärend und bedürfen daher hier keiner weiteren Erläuterung.

Im Falle eines ISDN-Netzes sind die Nachrichten (Messages) funktioneller Art und werden im ISDN-D-Kanal übertragen. Bei einem analogen Netz handelt es sich um Rufimpulse und Belegt-Signale. Nach Aufbau der Verbindung werden sämtliche Informationen zwischen den Einheiten per FSK-Signalisierung im Sprachband übertragen, speziell in Übereinstimmung mit den ETSI-Spezifikationen ETS 300 659-1 [4] und ETS 300 659-2 [5].

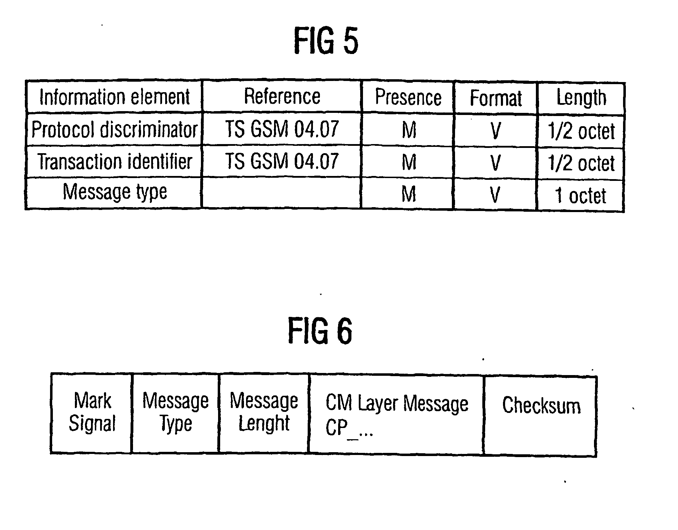

In Fig. 5 ist der Aufbau einer zusätzlichen Nachricht CP CONNECT gezeigt, die zur Benachrichtigung der rufenden Einheit seitens der angerufenen Einheit über den Aufbau der Verbindung dient. Diese Benachrichtigung ist erforderlich, um die Abläufe in der CM-Schicht in Gang zu setzen. Die Nachrichtenartkodierung ist: 0x40 0100 0000B, und das Format folgt GSM04.7/Kapitel 11 [2].

Die Schicht DL ermöglicht dem Verbindungsmanager (Schicht CM) die Absendung und den Empfang von Nachrichten mit der Partner-Einheit, sie stellt die Bitfehlererfassung bereit und realisiert für eine Nachricht in der Schicht CM ein Ankündigungssignal (Mark Signal).

In Fig. 6 ist das Format einer Nachricht in der Datenverbindungs-Schicht dargestellt. Das Feld "Mark Signal" besteht aus einem Block von 80 ± 25 Bit. Das Feld "Message Type" umfaßt ein Oktett und enthält ein binär kodierte Identifizierungs-Kennzahl für die Nachricht. Die Kodierung für einen DL_SMS_INFO Message Type ist: 011H 0001 0001B. Die Kodierung für einen DL_SMS_ERROR Message Type ist: 012H 0001 0010 B.

Das Feld "Message Length" umfaßt ein Oktett und enthält die binär kodierte Anzahl von Oktetts der Nachricht (unter Ausnahme der Oktetts des Message Type, der Message Length und der Checksum). Insgesamt ist eine Nachrichtenlänge bis zu 255 Oktetts erlaubt. Das Feld "Checksum" umfaßt ein Oktett und enthält die beiden Komplemente der Summe aller Oktetts in der Nachricht, beginnend vom "Message Type"-Oktett bis zum Ende, modulo 256.

Im Falle eines Prüfsummen-Fehlers sendet die Datenverbindungs-Schicht der empfangenden Einheit eine Nachricht des Typs "DL_SMS_ERROR" an die (ursprünglich) sendende Einheit. In dieser Nachricht ist das Datenfeld leer und die Nachrichtenlänge (Message Length) auf Null gesetzt. Die Datenverbindungs-Schicht der sendenden Einheit hat daraufhin die letzte gesendete Nachricht zu wiederholen.

Zur physikalischen Schicht ist noch anzumerken, daß im Falle einer FSK-Signalisierung eine Halbduplex-1200-Baud-Modulation eingesetzt werden kann. Im Falle einer DTMF-Signalisierung wird jedes Oktett einer Nachricht in der Datenverbindungs-Schicht in das höhere (obere) und niedere (untere) Halbbyte aufgeteilt. Jedes Halbbyte wird mit einem DTMF-Bit kodiert. Zuerst wird das obere Halbbyte gesendet und dann das untere. Im Falle der DTMF-Signalisierung wird das Ankündigungssignal der DL-Nachricht weggelassen.

Hinsichtlich der Signalisierungsmethode bestehen diverse Kombinationsmöglichkeiten; im Normalfall wird im Telekommunikations-Endgerät eine Auswahl fest installiert, die dann vom Nutzer nicht mehr zu verändern ist.

## Patentansprüche

1. Verfahren zur Übermittlung einer Nachricht von einem ersten zu einem zweiten Telekommunikations-Endgerät (CD), von denen mindestens eines an ein leitungsgebundenes Telefonnetz (PSTN) angeschlossen ist, wobei
- die Nachricht als Kurznachricht, insbesondere über eine Eingabetastatur oder einen Touch-Screen, am ersten Telekommunikations-Endgerät eingegeben wird,
- die Kurznachricht in das Short-Message-Format gebracht wird,
- über eine adäquat spezifizierte Datenverbindungs-Schicht (DL) ein logischer Verbindungsaufbau realisiert wird,
- die Kurznachricht im Short-Message-Format in einer adäquat spezifizierten physikalischen Schicht über DTMF- oder FSK-Off-Hook-Signalisierung im Sprachband an ein Short-Message-Dienstzentrum (SMSC) und von diesem zum zweiten Telekommunikations-Endgerät übertragen wird und
- die vom Short-Message-Dienstzentrum erhaltene Kurznachricht im zweiten Telekommunikations-Endgerät in ein Ausgabeformat umgesetzt und, insbesondere auf einer Anzeigeeinheit, ausgegeben wird.

2. Telekommunikationssystem mit Mitteln zur Durchführung der Verfahrensschritte nach Anspruch 1, mit einem ersten und zweiten Telekommunikations-Endgerät (D) und einem leitungsgebundenen Telefonnetz (PSTN), an das mindestens das erste oder zweite Telekommunikations-Endgerät angeschlossen ist,
**gekennzeichnet durch**
ein SMS-Übertragungsprotokoll, in dem eine Datenverbindungs-Schicht (DL) und eine physikalische Schicht spezifisch definiert sind, und
Mittel im ersten und zweiten Telekommunikations-Endgerät zur Implementierung des SMS-Ubertragungsprotokolls zur Eingabe bzw. Ausgabe einer Kurznachricht.

3. Telekommunikationssystem nach Anspruch 2,
**dadurch gekennzeichnet, daß** eines der Telekommunikations-Endgeräte an ein nach dem GSM-oder UMTS-Standard betriebenes Mobilfunknetz angeschlossen ist, wobei das leitungsgebundene Netz (PSTN) mit dem Mobilfunknetz über eine Gateway-Mobilvermittlungsstelle verbunden ist.

4. Telekommunikationssystem nach Anspruch 2 oder 3,
**dadurch gekennzeichnet, daß** eines der Telekommunikations-Endgeräte ein Schnurlostelefon ist, welches über eine nach dem DECT-Standard betriebene Feststation oder Nebenstellenanlage an das leitungsgebundene Telefonnetz angeschlossen ist.

5. Telekommunikationssystem nach einem der Ansprüche 2 bis 4, **gekennzeichnet durch**
ein Übertragungsprotokoll, in dem neben der Datenverbindungs-Schicht (DL) und der physikalischen Schicht eine Short-Message-Transferschicht (SM-TL) gemäß ETSI-Dokument GSM03.40, eine Short-Message-Relaisschicht (SM-RL) nach GSM03.40 und 04.11 sowie eine Verbindungsmanagement-Schicht (CM) nach GSM04.11 definiert sind.

6. Telekommunikationssystem nach Anspruch 5,
**dadurch gekennzeichnet, daß** in der Verbindungsmanagement-Schicht (CM) eine zusätzliche Nachricht zur spezifischen Signalisierung des Verbindungszustandes an die rufende Einheit im Format nach GSM04.07/Kapitel 11 definiert ist.

7. Telekommunikationssystem nach einem der Ansprüche 2 bis 6,
**dadurch gekennzeichnet, daß**
das Format einer Nachricht in der Datenverbindungs-Schicht (DL) aus
- einem Feld "Mark-Signal",
- einem Feld "Message-Type",
- einem Feld "Message-Length",
- einem Feld "CM Layer Message CP_...",
- einem Feld "Checksum",
besteht, wobei die Felder in dem Format in der genannten Reihenfolge angeordnet sind.

8. Telekommunikationssystem nach einem der Ansprüche 2 bis 6, **gekennzeichnet durch**
ein dem leitungsgebundenen Telefonnetz (PSTN) zugeordnetes Short-Message-Dienstzentrum (SMSC) zur Übermittlung von Kurznachrichten im Short-Message-Format.

## Claims

1. Method for transmission of a message from a first to a second telecommunication terminal (CD), of which at least one is connected to a line-connected telephone network (PSTN),
- the message being input as a short message, in particular via an input keypad or a touchscreen, on the first telecommunication terminal,
- the short message being converted into the short message format,
- a logical connection setup being realized by means of an adequately specified data link layer (DL),
- the short message being transmitted in the short message format in an adequately specified physical layer by means of DTMF or FSK off-hook signalling in the voice band to a short message service centre (SMSC) and from the latter to the second telecommunication terminal, and
- the short message obtained from the short message service centre being converted, in the second telecommunication terminal, into an output format and being output, in particular on a display unit.

2. Telecommunication system having means for carrying out the method steps according to Claim 1, having a first and a second telecommunication terminal (D) and a line-connected telephone network (PSTN), to which at least the first or second telecommunication terminal is connected,
**characterized by**
an SMS transmission protocol in which a data link layer (DL) and a physical layer are specifically defined, and
means in the first and second telecommunication terminals for implementing the SMS transmission protocol for inputting or outputting a short message.

3. Telecommunication system according to Claim 2,
**characterized in that**
one of the telecommunication terminals is connected to a mobile radio network operated according to the GSM or UMTS standard, the line-connected network (PSTN) being connected to the mobile radio network via a gateway mobile switching centre.

4. Telecommunication system according to Claim 2 or 3,
**characterized in that**
one of the telecommunication terminals is a cordless telephone which is connected to the line-connected telephone network via a fixed station or private branch exchange operated according to the DECT standard.

5. Telecommunication system according to one of Claims 2 to 4,
**characterized by**
a transmission protocol in which a short message transfer layer (SM-TL) in accordance with ETSI document GSM03.40, a short message relay layer (SM-RL) according to GSM03.40 and 04.11 and also a connection management layer (CM) according to GSM04.11 are defined in addition to the data link layer (DL) and the physical layer.

6. Telecommunication system according to Claim 5,
**characterized in that**
an additional message for the specific signalling of the connection state to the calling unit in the format according to GSM04.07/chapter 11 is defined in the connection management layer (CM).

7. Telecommunication system according to one of claims 2 to 6,
**characterized in that**
the format of a message in the data link layer (DL) consists of
- a field "mark signal",
- a field "message type",
- a field "message length",
- a field "CM layer message CP_...",
- a field "checksum",
the fields in the format being arranged in the stated order.

8. Telecommunication system according to one of Claims 2 to 6,
**characterized by**
a short message service centre (SMSC) assigned to the line-connected telephone network (PSTN) and serving for the transmission of short messages in the short message format.

## Revendications

1. Procédé de transmission d'un message d'un premier vers un deuxième terminal de télécommunications (CD) dont l'un au moins est raccordé à un réseau téléphonique filaire (PSTN),
- le message étant introduit en tant que message court, en particulier par l'intermédiaire d'un clavier de saisie ou d'un écran tactile (Touch Screen), sur le premier terminal de télécommunications,
- le message court étant mis dans le format de messages courts,
- un établissement de connexion logique étant réalisé par l'intermédiaire d'une couche de liaison de données (DL) spécifiée adéquatement,
- le message court étant transmis dans le format de messages courts dans une couche physique spécifiée adéquatement à un centre de service de messages courts (SMSC) par l'intermédiaire d'une signalisation DTMF ou FSK-Off-Hook dans la bande vocale et, de là, vers le deuxième terminal de télécommunications et
- le message court reçu par le centre de service de messages courts étant converti dans un format de sortie dans le deuxième terminal de télécommunications et étant sorti en particulier sur une unité d'affichage.

2. Système de télécommunications comprenant des moyens permettant l'exécution des étapes du procédé selon la revendication 1, comprenant un premier et un deuxième terminal de télécommunications (D) et un réseau téléphonique filaire (PSTN) auquel est raccordé au moins le premier ou le deuxième terminal de télécommunications,
**caractérisé par**
- un protocole de transmission SMS dans lequel sont définies spécifiquement une couche de liaison de données (DL) et une couche physique et
- des moyens dans les premier et deuxième terminaux de télécommunications pour implémenter le protocole de transmission SMS pour la saisie resp. la sortie d'un message court.

3. Système de télécommunications selon la revendication 2,
**caractérisé en ce que**
l'un des terminaux de télécommunications est raccordé à un réseau radio mobile exploité selon la norme GSM ou la norme UMTS, le réseau filaire (PSTN) étant relié au réseau radio mobile par l'intermédiaire d'un centre de commutation mobile gateway.

4. Système de télécommunications selon la revendication 2 ou 3,
**caractérisé en ce que**
l'un des terminaux de télécommunications est un téléphone sans fil qui est raccordé au réseau téléphonique filaire par l'intermédiaire d'une station fixe ou d'une installation de poste supplémentaire exploitée selon la norme DECT.

5. Système de télécommunications selon l'une des revendications 2 à 4,
**caractérisé par**
un protocole de transmission dans lequel sont définies, outre la couche de liaison de données (DL) et la couche physique, une couche Short-Message-Transfer (SM-TL) selon le document GSM03.40 de l'ETSI, une couche Short-Message-Relay (SM-RL) selon GSM03.40 et 04.11 ainsi qu'une couche de gestion de connexion (CM) selon GSM04.11.

6. Système de télécommunications selon la revendication 5,
**caractérisé en ce**
**qu'**est défini, dans la couche de gestion de connexion (CM), un message supplémentaire pour la signalisation spécifique de l'état de la connexion à l'unité appelante dans le format selon GSM04.07 / chapitre 11.

7. Système de télécommunications selon l'une des revendications 2 à 6,
**caractérisé en ce que**
le format d'un message dans la couche de liaison de données (DL) se compose
- d'un champ «Mark Signal»,
- d'un champ «Message Type»,
- d'un champ «Message Length»,
- d'un champ «CM Layer Message CP_...»,
- d'un champ «Checksum»,
les champs étant agencés dans le format dans l'ordre mentionné.

8. Système de télécommunications selon l'une des revendications 2 à 6,
**caractérisé par**
un centre de service de messages courts (SMSC) affecté au réseau téléphonique filaire (PSTN) pour la transmission de messages courts dans le format de messages courts.
